(19) **Europäisches Patentamt**
**European Patent Office**
**Office européen des brevets**

(11) **EP 2 575 481 B1**

(12) **EUROPEAN PATENT SPECIFICATION**

(45) Date of publication and mention
of the grant of the patent:
**20.07.2016  Bulletin 2016/29**

(21) Application number: **11727033.0**

(22) Date of filing: **03.06.2011**

(51) Int Cl.:
*A22C 13/00* (2006.01)     *C08L 77/00* (2006.01)
*C08L 23/08* (2006.01)     *B32B 27/34* (2006.01)
*B32B 27/28* (2006.01)     *B32B 27/08* (2006.01)

(86) International application number:
**PCT/US2011/038984**

(87) International publication number:
**WO 2011/153389 (08.12.2011 Gazette 2011/49)**

(54) **NON-POROUS, MOISTURE AND GAS PERMEABLE FILMS**

NICHT-PORÖSE, FEUCHTIGKEITS- UND GASDURCHLÄSSIGE FOLIEN

FILMS NON-POREUX, PERMÉABLES À L'HUMIDITÉ ET AUX GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2010  US 351126 P**

(43) Date of publication of application:
**10.04.2013  Bulletin 2013/15**

(73) Proprietor: **E. I. du Pont de Nemours and Company
Wilmington, DE 19898 (US)**

(72) Inventor: **CHEN, John, Chu
Hockessin, Delaware 19707 (US)**

(74) Representative: **Heinemann, Monica et al
Abitz & Partner
Patentanwälte mbB
Postfach 86 01 09
81628 München (DE)**

(56) References cited:
**EP-A1- 0 797 918     WO-A1-2011/084448
US-A- 4 303 711**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to moisture and gas permeable non-porous polymeric films.

Background Discussion and Related Art

Synthetic films having a high permeability to gases such as oxygen, and moisture can be useful in many applications.

One application where it can be desirable to have film with high water and gas permeability is as a casing for foodstuffs, or in food packaging. Foodstuff casings have been made either of natural material such as cellulose or animal guts, or more recently of synthetic material. Usually, the foodstuff is packed into the casing. When smoked products are desired, the encased foodstuff can be further subjected to a smoking process. In a conventional smoking process, the product is suspended in a chamber wherein it is exposed to hot smoke from burning wood. This process has previously had the disadvantage that only natural casings could be used, for example, those obtained from guts or cellulose or collagen casings which all show a natural permeability to smoke.

Casings made from natural products and/or cellulose can present many disadvantages: they can be expensive; their great permeability to steam can cause significant weight loss from a foodstuff; and the product can be unstable due to drying and/or superficial fat oxidation. Also, graying caused by microbial spoiling of the natural casing often appears on casings. The manufacturing process for fibrous and cellulose casings involves emissions of carbon disulfide and hydrogen sulfide to the atmosphere, which can be an environmental concern, or require expensive gas scrubbing systems to minimize emissions.

There have been different approaches that attempt to overcome these problems. Single and multilayer plastic casings for packaging sausages are known in the art, for example. These previous attempts at preparing casings from synthetic materials have had limited success. Films prepared from a number of different plastic compositions are suitable for preparing cooked sausages, but they are insufficiently permeable to smoke. For example, monolayer films comprising polyamides (nylons) have the mechanical properties required for this application but are not sufficiently permeable to humidity and

Polyamides have also been blended with other polymeric materials in attempts to make blended compositions suitable for sausage casings. *See, e.g.,* US5773059, EP797918, EP476963, and WO 98/19551.

Recently, developments have been described in US2004/0047951 to make polyamide-based casings more smokeable by blending in absorptive polymers such as block copolyetheramides. However, preparing casings from the blends in a double-bubble process has proven to be difficult.

Unmodified ethylene acid copolymers have not been known for high water/gas permeability. However, ethylene acid copolymers and/or their ionomers have other properties that would make them desirable in applications where water/gas permeability is an important factor.

Moisture and gas permeable ionomeric films have been described in US7045566. The films are obtained from blends of ionomers with an organic acid salt in the amount of at least about 5 weight %, and have MVTR greater than films obtained from conventional ionomers. The films were described as suitable for preparation of tubular casings and shrinkbags, in particular, casings for smoked foodstuffs.

US Patent Application serial number 61/286,903 describes blends of polyamides and organic acid modified ionomers for use in smokeable casings. US Patent Application Publication 2008/0131713 describes antistatic blends of polyamides and potassium ionomers. US Patent 4,303,711 discloses a tubular film for packing foodstuffs consisting of a mixture of polyamide with at least one ionomer resin wherein the ionomer resin may be partly or completely replaced by a modified ethylene / vinyl acetate copolymer.

It is desirable to have a synthetic casing that can be used effectively and efficiently for storage and for a smoking process. It is also desirable that the casing be easy to prepare using conventional film forming processes such as double-bubble or triple bubble processing.

Summary of The Invention

The invention relates to a film comprising a layer comprising
a selectively permeable blend comprising

(a) 50 to 80 weight % of polyamide;
(b) 20 to 50 weight % a potassium-containing composition comprising
an ethylene acid copolymer comprising copolymerized units of ethylene, from 10 to 35 weight %, based on the weight of the ethylene acid copolymer, of copolymerized units of at least one $C_{3-8}$ $\alpha,\beta$-ethylenically unsaturated carboxylic acid, and optionally from 0 to 35 weight %, based on the weight of the ethylene acid copolymer, of copolymerized units of a comonomer selected from the group consisting of alkyl acrylate, alkyl methacrylate and combinations thereof, wherein the alkyl group has 1 to 8 carbon atoms; the rest being derived from the ethylene; wherein greater than 80% of the carboxylic acid moieties of the ethylene acid copolymer are neutralized to salts containing potassium cations or a combination of potassium and one or more alkali metal, transition metal, and alkaline earth metal cations in which potassium comprises a preponderance of the cations;

(c) up to 10 weight % of a dipolymer consisting essentially of copolymerized units of ethylene and alkyl acrylate or alkyl methacrylate, wherein the alkyl group has 1 to 8 carbon atoms; and up to 5 weight % of a compatibilizer selected from the group consisting of (d), (e) and combinations of (d) and (e), wherein

(d) is a dicarboxylate-containing copolymer;

(e) is an ethylene glycidyl ester copolymer comprising, based on the total weight of the ethylene glycidyl ester copolymer, 30 to 95% of copolymerized units of ethylene, 0.5 to 25% of copolymerized units of one or more olefins of the formula $CH_2=C(R^1)CO_2R^2$, and 0 to 70% of copolymerized units of one or more olefins of the formula $CH_2=C(R^3)CO_2R^4$; wherein $R^1$ is hydrogen or an alkyl group with 1 to 6 carbon atoms, $R^2$ is glycidyl, $R^3$ is hydrogen or an alkyl group with 1 to 8 carbon atoms and $R^4$ is an alkyl group with 1 to 8 carbon atoms, based on the total weight of the ethylene glycidyl ester copolymer; the weight % of (a), (b), (c) (d) when present and (e) when present in the composition is based on the total weight of (a), (b), (c) (d) when present and (e) when present;

wherein the film is from 6.4 $\mu$m (0.25 mils) to 0.13 mm (5 mils) in thickness, preferably from 13 $\mu$m (0.5 mils) to 76 $\mu$m (3 mils), and has a moisture vapor transmission rate (MVTR) of at least 300 $g/m^2$-24 hours, measured according to ASTM D6701-01, at 37.8 °C at 100% relative humidity.

The invention also includes a package for containing and processing a foodstuff, such as sausage casings, comprising a film described above.

The invention also provides a method for preparing a foodstuff comprising preparing a package comprising the film described above, optionally including a shirring operation; placing a foodstuff inside the package, and treating the packaged foodstuff with smoke and heat.

Detailed Description of The Invention

Trademarks and tradenames are in uppercase.

"Copolymer" means a polymer containing two, or two or more different monomers. The terms "dipolymer" and "terpolymer" mean polymers containing only two and three different monomers respectively. The expression "copolymer of" followed by a list of monomers means a copolymer whose copolymerized units are derived from the various monomers listed.

Blends of polyamides (nylon) with highly moisture permeable potassium-containing ionomers and optional compatibilizers including dicarboxylate-containing polymers such as ethylene/maleic anhydride copolymers or ethylene/maleic acid monoester copolymers, epoxide-containing copolymers such as ethylene/glycidyl methacrylate or ethylene/butyl acrylate/glycidyl methacrylate have the permeability and mechanical properties required for producing smokeable food packaging such as sausage casings.

Smoking of foodstuffs provides the following effects: flavoring, coloring, preserving by antioxidative and antimicrobial action and formation of a secondary skin. A general reference on the chemical aspects of the smoking of meat and meat products may be found in "Advances in Food Research, vol. 29", Academic Press, Inc, Orlando, Fla., 1984, pages 87-150. Curing smoke consists of a dispersed phase of solid and liquid particles as well as a gaseous phase. The size of liquid particles varies between 0.2-0.4 $\mu$m.

Both smoke flavor and color are formed by the combined effects of many agents/substances and by their reactions with the product itself. Smoke flavor and color do not necessarily form by influence of the same factors, and certain factors may be synergistic properties.

Smokeability refers to the smoke-permeability properties of the casing. It has been observed that the smokeability of a casing is directly proportional to the moisture vapor transmission rate (MVTR) of the casing.

MVTR is the rate of water vapor transmission or diffusion through the smallest dimension (thickness) of a generally planar or tubular structure such as a film. MVTR values are expressed in $g/m^2$-atm-24 hours. Transmission rate is generally inversely dependent on the thickness of that structure (for a given film material, thicker structures will have lower transmission rates). MVTR of a film comprising a given composition can be normalized to a moisture vapor permeation value (MVPV) for the composition at 25.4 $\mu$m (1-mil) thickness, g-25.4 $\mu$m/$m^2$/101.325 kPa-24 hours (g-1-mil/$m^2$/atm-24 hours). For comparing the efficiency in permeation for various compositions, the normalized value is most relevant.

For multilayer structures, the MVTR is dependent on the thickness and permeability of each of the individual layers of the structure in the following manner:

$$\frac{1}{MVPV_{package}} = \frac{x_1}{MVPV_1} + \frac{x_2}{MVPV_2} + \dots \frac{x_n}{MVPV_n} \quad (1)$$

where $MVPV_{package}$ is the permeability of the structure normalized to 1 mil, $MVPV_1$ is the permeability of layer 1, $MVPV_2$ the permeability of layer 1, $x_1$ is the fraction of the structure thickness that comprises layer 1, and $x_2$ is the fraction of the structure thickness that comprises layer 2, etc.

Polyamides melt-blended with potassium-containing ionomers and optionally compatibilizers selected from the group consisting of dicarboxylate-containing polymers and ethylene/glycidyl ester copolymers provide smoke-permeable compositions and films made therefrom that are suitable for preparing smoked sausages.

The selectively permeable composition includes a polyamide, also referred to as nylon and the terms used interchangeably herein. Any polyamide (abbreviated PA), produced from lactams or amino acids, known to one skilled in the art, may be used in the composition. Polyamides suitable for use herein include aliphatic polyamides, amorphous polyamides, or a mixture thereof. "Aliphatic polyamides" as the term is used herein can refer to aliphatic polyamides, aliphatic copolyamides, and blends or mixtures of these.

Polyamides from single reactants such as lactams or amino acids, referred to as AB type polyamides are disclosed in Nylon Plastics (edited by Melvin L. Kohan, 1973, John Wiley and Sons, Inc.) and include nylon-6, nylon-11, nylon-12, or combinations of two or more thereof. Polyamides prepared from more than one lactam or amino acid include nylon-6,12. Frequently used polyamides include nylon-6, nylon-11, nylon-12, and nylon-6,12 or combinations of two or more thereof. Polyamide 6 is commercially available from BASF as ULTRAMID® B4001.

Other well known polyamides useful in the composition include those prepared from condensation of diamines and diacids, referred to as AABB type polyamides (including nylon-66, nylon-610, nylon-612, nylon-1010, and nylon-1212) as well as from a combination of diamines and diacids such as nylon-66/610, or combinations of two or more thereof.

Polyamides 6/66 are commercially available under the tradenames ULTRAMID® C4 and ULTRAMID® C35 from BASF, or under the tradename "Ube5033FXD27" from Ube Industries Ltd.

In a preferred embodiment, the aliphatic polyamide has a viscosity ranging from about 140 to about 270 cubic centimeters per gram ($cm^3$/g) measured according to ISO307 at 0.5 % in 96 % $H_2SO_4$.

The composition may further comprise other polyamides such as those described in U.S. Patents 5,408,000; 4,174,358; 3,393,210; 2,512,606; 2,312,966 and 2,241,322. The film may also comprise partially aromatic polyamides. Non-aliphatic amorphous polyamides including poly(m-xylene adipamide) (such as nylon MXD6 from Mitsubishi Gas Chemical America Inc.) or amorphous polyamide produced from hexamethylene diamine and isophthalic/terephthalic acids (the amorphous nylon resin 6-I/6-T commercially available under the tradename Selar® PA from E.I. du Pont de Nemours and Company (DuPont) or commercially available under the tradename Grivory® G 21 from EMS-Chemie AG) may be used.

Because polyamides and processes for making them are well known to one skilled in the art, disclosure of their preparation is omitted herein for the interest of brevity.

Preferred polyamides are selected from the group comprising:

PA-6 = H-(NH-$(CH_2)_5$-CO)$_n$-OH (nylon-6) homopolymer or copolymer,

PA-66 = H-(NH-$(CH_2)_6$-HN-CO-$(CH_2)_4$-CO)$_n$-OH (nylon 66),

PA-612 = H-(NH-$(CH_2)_6$-HN-CO-$(CH_2)_{10}$-CO)$_n$-OH (nylon 612),

PA-6/66 = H-(NH-$(CH_2)_5$-CO)-OH + H-(NH-$(CH_2)_6$-HN-CO-$(CH_2)_4$-CO)-OH (in random order) (nylon 6/66),

PA-6/12 = H-NH-$(CH_2)_5$-CO)-OH + H-(NH-$(CH_2)_{11}$-CO) -OH (in random order) (nylon 6/12),

PA-6/69 = H-(NH-$(CH_2)_5$-CO)-OH + H- (NH-$(CH_2)_6$--HN-CO-$(CH_2)_7$-CO)-OH (in random order) (nylon 6/69), and

MXDA-containing polyamides, partially aromatic polyamides and mixtures of above mentioned polyamides.

More preferred polyamides include PA-6, PA-6/66, PA-66, or mixtures of PA-6/66 and PA-6.

The polyamide is present in the selectively permeable composition in an amount from 50 to 80 weight %, based on the total weight of all polymeric components of the blend.

Also as described below, layers comprising or consisting essentially of the above-described polyamides without added ionomer can be included in multilayer structures comprising a layer of the polyamide-ionomer blend composition described herein.

The second component of the polyamide-ionomer composition is an ethylene acid copolymer wherein the acid moieties of the copolymer are at least partially neutralized by potassium. The selectively permeable composition includes an ionomer composition comprising, consisting essentially of, or produced from one or more ethylene acid copolymers or ionomers of the acid copolymers.

These copolymers may be referred to as E/X/Y copolymers wherein E represents copolymerized units of ethylene, X is present in 10 to 35 weight % of the copolymer and represents copolymerized units of at least one $C_3$ to

$C_8$ α,β-ethylenically unsaturated monocarboxylic acid, and Y is present in from 0 to 35 weight % and represents copolymerized units of a softening comonomer, the remainder being copolymerized units of ethylene.

$C_3$ to $C_8$ α,β-ethylenically unsaturated monocarboxylic acid used as X includes unsaturated acids such as acrylic acid, methacrylic acid, or combinations of two or more thereof. X can be present in a range of 10 to 35, 15 to 25, or 15 to 20, weight % of the acid copolymer.

Of note are acid copolymers wherein Y is 0 weight % of the copolymer, that is, an E/X dipolymer. Specific E/X acid dipolymers include ethylene/acrylic acid dipolymers and ethylene/methacrylic acid dipolymers.

Softened ethylene acid copolymers comprising copolymerized units of ethylene, copolymerized units of at least one $C_3$ to $C_8$ α,β-ethylenically unsaturated monocarboxylic acid, and copolymerized units of a softening comonomer selected from vinyl acetate, alkyl acrylate or alkyl methacrylate may also be used in the potassium ionomer composition.

By "softening" is meant that the terpolymer is less crystalline than a dipolymer having the same amount of copolymerized units of the at least one $C_3$ to $C_8$ α,β-ethylenically unsaturated carboxylic acid and no copolymerized units of a softening comonomer.

Examples of softening comonomers (Y) include vinyl acetate, alkyl acrylate, alkyl methacrylate, or combinations thereof wherein the alkyl groups have from 1 to 8, or 1 to 4, carbon atoms. Suitable softening comonomers are, for example, methyl acrylate, ethyl acrylate, isopropyl acrylate, n-butyl (meth)acrylate, methyl methacrylate, ethyl methacrylate, isopropyl methacrylate and n-butyl methacrylate.

When present in the copolymer, copolymerized Y units may be from 0.1 to 35, or 2 to 35, or preferably 5 to 30 weight % of the copolymer. Examples of E/X/Y terpolymers include ethylene/acrylic acid/n-butyl acrylate, ethylene/methacrylic acid/n-butyl methacrylate, ethylene/acrylic acid/iso-butyl acrylate, ethylene/methacrylic acid/iso-butyl methacrylate, ethylene/acrylic acid/methyl acrylate, ethylene/methacrylic acid/methyl methacrylate, ethylene/acrylic acid/ethyl acrylate terpolymers, and ethylene/methacrylic acid/ethyl methacrylate terpolymers, or combinations of two or more thereof.

The acid copolymers used to make the compositions are preferably "random" acid copolymers, polymerized by adding all monomers simultaneously, so that at least some of atoms from the comonomer(s) form part of the polymer backbone. They are distinct from a graft copolymer, where an additional monomer is grafted onto an existing polymer, often by a subsequent free radical reaction.

The ethylene acid copolymers may be produced by any methods known to one skilled in the art such as described in US Patent 4,351,931, or by use of "co-solvent technology" disclosed in US Patent 5,028,674.

An ionomer can be prepared from the ethylene acid copolymer described above by neutralization of at least a portion of the acid moieties in the ethylene acid copolymer. Neutralizing agents, including basic compounds with metal cations such as potassium ions, are used to neutralize at least some portion of the acidic groups in the acid copolymer. Ionomers may be prepared from the acid copolymers, such as those disclosed in US Patents 3,264,272 and 3,344,014. The acid copolymer may be used to prepare melt processable ionomers by treatment with a metal compound. The ionomers may be nominally neutralized to any level such as 15 to 90%, or even higher, or 40 to 85% of the acid moieties.

Potassium compounds for neutralizing the acid copolymer can include compounds of potassium, optionally small amounts (such as less than 10, 5, 1, 0.1 or 0.01 %) of other cations such as other alkali metal (for example, lithium or sodium) ions, transition metal ions or alkaline earth ions and mixtures or combinations of such cations. Potassium compounds include formates, acetates, nitrates, carbonates, hydrogencarbonates, oxides, hydroxides or alkoxides of the ions of potassium and other alkali metals, and formates, acetates, nitrates, oxides, hydroxides or alkoxides of the ions of alkaline earth metals, and transition metals. Compounds of note are potassium hydroxide, potassium acetate, potassium carbonate, or combinations of two or more thereof.

The acid moieties of the acid copolymer can be nominally neutralized by potassium cations, or a combination of potassium and one or more alkali metal, transition metal, or alkaline earth metal cations, such as lithium, sodium, magnesium, calcium, or zinc, wherein potassium comprises a preponderance (greater than 80 molar %, more preferably greater than 90 molar % or higher) of the cations. Preferred mixed-ion ionomers comprise potassium and sodium cations.

Useful ionomers include ionomers obtained from the ethylene acid copolymers described above having a weight average molecular weight ($M_w$) of from about 80,000 to about 500,000.

Also as described below, layers comprising or consisting essentially of an unmodified ionomer as described above without added polyamides can be included in multilayer structures comprising a layer of the polyamide-ionomer blend composition. "Unmodified" refers to ionomers that are not blended with any material that has an effect on the properties of the unblended ionomer. These unmodified ionomers need not be potassium-containing ionomers.

Other copolymers of ethylene and polar comonomers optionally may also be included in the potassium ionomer composition. For example, an ethylene copolymer of note is a dipolymer consisting essentially of copolymerized units of ethylene and copolymerized units of an ester of an unsaturated acid. These copolymers may modify certain physical properties of the ionomer, such as toughness. They will also have an impact on the permeability of the composition.

When present, these optional ethylene ester dipolymers may be present in from 0.1 to 10 weight % of the combined weight of the polymeric components of the composition.

Preferably, the esters of unsaturated carboxylic acids are alkyl acrylates or alkyl methacrylates. The alkyl moiety of the alkyl acrylate or alkyl methacrylate may contain 1 to 8 or 1 to 4 carbon atoms, such as methyl, ethyl, and branched or unbranched propyl, butyl, pentyl, and hexyl groups.

Examples of esters of unsaturated carboxylic acids that are suitable comonomers include, but are not limited to, methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, octyl acrylate, and octyl methacrylate.

For example, the ester copolymer may be an ethylene/alkyl acrylate copolymer comprising copolymerized units of ethylene and copolymerized units of an alkyl acrylate. The polarity of the alkyl acrylate comonomer may be manipulated by changing the relative amount and identity of the alkyl group present in the comonomer. These copolymers may comprise 20 to 40, preferably 24 to 35, weight % of alkyl acrylate. A notable copolymer comprises copolymerized units of ethylene and copolymerized units of n-butyl acrylate. Similarly, a $C_1$-$C_6$ alkyl methacrylate comonomer may be used as a comonomer to provide an ethylene/alkyl methacrylate copolymer.

The ethylene/alkyl acrylate copolymers and ethylene/alkyl methacrylate copolymers may have melt flow rates ranging from 0.1 to 200 g/10 minutes, as determined in accordance with ASTM D1238 at 190°C and 2.16 kg, and therefore suitable ethylene/alkyl acrylate copolymers and ethylene/alkyl methacrylate copolymers can vary significantly in molecular weight.

The ester copolymer may be in the form of a single ethylene/alkyl acrylate copolymer, a single ethylene/alkyl methacrylate copolymer, or a mixture of any two or more different ethylene/alkyl acrylate copolymers and/or ethylene alkyl methacrylate copolymers.

The ethylene/alkyl acrylate copolymers and/or ethylene/alkyl methacrylate copolymers may be prepared by well known processes using either autoclave or tubular reactors. For example, the copolymerization can be conducted as a continuous process in an autoclave, where ethylene, the alkyl acrylate (or alkyl methacrylate), and optionally a solvent such as methanol (see U.S. Patent 5,028,674) are fed continuously into a stirred autoclave such as the type disclosed in U.S. Patents 2,897,183 and 4,351,931, together with an initiator. Alternatively, the ethylene/alkyl acrylate copolymer (or ethylene/alkyl methacrylate copolymer) may be prepared in a tubular reactor, according to the procedure described in the article "High Flexibility EMA Made from High Pressure Tubular Process" (Annual Technical Conference - Society of Plastics Engineers (2002), 60th (Vol. 2), 1832-1836). The ethylene/alkyl acrylate copolymer or ethylene/alkyl methacrylate copolymer also may be obtained in a high pressure, tubular reactor at elevated temperature with additional introduction of reactant comonomer along the tube. The ethylene/alkyl acrylate copolymer or ethylene/alkyl methacrylate copolymer also may be produced in a series of autoclave reactors wherein comonomer replacement is achieved by multiple zone introduction of reactant comonomer as taught in U.S. Patents 3,350,372; 3,756,996; and 5,532,066.

Ethylene/alkyl acrylate copolymers useful herein include those available from E. I. du Pont de Nemours and Company under the tradename Elvaloy® AC resins.

Generally, at least one compatibilizing polymer selected from the group consisting of dicarboxylate-containing polymers and ethylene glycidyl copolymers and combinations thereof is used in the selectively permeable composition. Although dicarboxylate-containing polymers and ethylene glycidyl copolymers may be used in combination in the composition, preferably only a single type of compatibilizer is used.

These copolymers improve compatibility of the ionomer and the polyamide, providing improved blending processibility and more consistent interphase dispersion. They may also impact the moisture permeability of the composition.

A dicarboxylate-containing polymer may optionally be used as the compatibilzer polymer. As used herein, the term "dicarboxylate-containing polymer" refers to a polymer comprising copolymerized units of ethylene or propylene and a polar comonomer selected from the group consisting of cyclic anhydrides of $C_4$-$C_8$ unsaturated diacids, monoesters of $C_4$-$C_8$ unsaturated acids having at least two carboxylic acid groups (e.g. those diacids wherein one carboxyl group is esterified and the other is a carboxylic acid group), diesters of $C_4$-$C_8$ unsaturated acids having at least two carboxylic acid groups, and mixtures thereof.

Preferably the cyclic anhydrides and the monoesters and diesters of the diacids are those wherein the dicarboxyl groups are vicinal (i.e. the carboxyl groups are substituted on consecutive carbon atoms). Cyclic anhydrides include maleic anhydride, citraconic anhydride, itaconic anhydride, tetrahydrophthalic anhydride, or combinations of two or more thereof. Examples of monoesters include maleic acid monoesters, fumaric acid monoesters and citraconic acid monoesters. Maleic acid monoesters are also known as maleic half-esters or alkyl hydrogen maleates. Examples of diesters include maleic acid diesters, fumaric acid diesters and citraconic acid diesters. The esters are preferably esters wherein the alkyl groups contain 1 to 4 carbon atoms.

Copolymers of ethylene and maleic anhydride are preferred. Copolymers of ethylene and maleic acid monoesters, more preferably maleic acid $C_1$-$C_4$ alkyl monoesters such as, for example, methyl, ethyl, n-propyl, isopropyl, and n-butyl monoesters are also preferred, notably copolymers of ethylene and maleic acid monoethyl ester (i.e. ethyl hydrogen maleate).

The dicarboxylate-containing copolymer may be obtained by known techniques, such as a grafting process in which a polymer selected from a polyethylene homopolymer or copolymer, a polypropylene homopolymer or copolymer, an ethylene/vinyl acetate copolymer, an ethylene/alkyl acrylate copolymer or an ethylene/alkyl methacrylate copolymer is dissolved in an organic solvent with an unsaturated dicarboxylic acid anhydride, unsaturated dicarboxylic acid monoester or unsaturated dicarboxylic acid diester and a radical generator, followed by heating with stirring. Grafting processes provide copolymers with from 0.1 to 3 weight % of anhydride units. Graft copolymers provide copolymers wherein no carbons from the unsaturated dicarboxylate group are incorporated into the polymer backbone and the dicarboxylate groups are pendant from the polymer backbone. These graft copolymers are available commercially from DuPont under the FUSABOND® or BYNEL® brand names.

Ethylene copolymers that include groups such as maleic anhydride or maleic acid monoethyl ester also may be readily obtained by a high-pressure free radical process, in which an olefin comonomer and the dicarboxylic comonomer are randomly copolymerized. The morphology of the random copolymer is such that the polymeric chains consist of random copolymerized units of ethylene and 4 or 5 to 15 % by weight of dicarboxylic comonomer units. Random copolymers are a distinct class and differ from grafted polymers. In these copolymers carbon atoms (those that were originally unsaturated) from the anhydride comonomer or dicarboxylate monoester or diester comonomer are incorporated into the polymer backbone.

A suitable high-pressure process is described, for example, in U.S. Patent 4,351,931. This process allows for preparation of copolymers with greater than 3 weight %, for example, 4 or 5 weight % to 15 weight %, of anhydride or monoester units. These copolymers include olefin/maleate copolymers such as ethylene/maleic anhydride and ethylene/maleic acid monoethyl ester copolymers.

The ethylene glycidyl ester copolymer optionally used as the compatibilizer can be made by copolymerizing units (comonomers) of (i) ethylene; (ii) one or more olefins of the formula $CH_2=C(R^1)CO_2R^2$ where $R^1$ is hydrogen or an alkyl group with 1 to 6 carbon atoms, such as methyl, and $R^2$ is glycidyl; and optionally (iii) one or more olefins of the formula $CH_2=C(R^3)CO_2R^4$, where $R^3$ is hydrogen or an alkyl group with 1 to 8 carbon atoms and $R^4$ is an alkyl group with 1 to 8 carbon atoms, such as methyl, ethyl, or butyl, or combinations thereof. Copolymerized units derived from ethylene may comprise, based on the copolymer weight, from 30, 40 or 50 % to 80, 90 or 95 %. Copolymerized units derived from monomer (ii) may comprise, based on the copolymer weight, from a lower limit of 0.5, 2 or 3 % to an upper limit of 17, 20, or 25 weight %. An example of the ethylene copolymer consists essentially of copolymerized units of ethylene and copolymerized units of glycidyl methacrylate and is referred to as EGMA. Copolymerized units derived from monomer (iii), when present, may comprise, based on the copolymer weight, from a lower limit of 3, 15 or 20% to an upper limit of 35, 40 or 70%. Optional monomers (iii) may be alkyl acrylates or alkyl methacrylates such as butyl acrylates. An example ethylene glycidyl ester copolymer consists essentially of copolymerized units of ethylene, copolymerized units of butyl acrylate, and copolymerized units of glycidyl methacrylate (EBAGMA). One or more of *n*-butyl acrylate, *tert*-butyl acrylate, *iso*-butyl acrylate, and *sec*-butyl acrylate may be used. Another example copolymer consists essentially of copolymerized units of ethylene, copolymerized units of methyl acrylate, and copolymerized units of glycidyl methacrylate (EMAGMA).

The ethylene glycidyl ester copolymers may additionally comprise other comonomers such as carbon monoxide. When present, copolymerized units of carbon monoxide generally will comprise up to 20 weight%, or 3 to 15 weight% of the total weight of the ethylene glycidyl ester copolymer.

The ethylene glycidyl ester copolymers may be prepared by any suitable process such as those disclosed in US Patents 3,350,372; 3,756,996; 5,532,066; 5,543,233; and 5,571,878. Alternatively the ethylene glycidyl ester copolymer may be a glycidyl methacrylate grafted ethylene copolymer or polyolefin, wherein an existing ethylene copolymer such as ethylene/methyl acrylate copolymer or a polyolefin such as polyethylene is reacted with glycidyl methacrylate to provide a copolymer with units derived from glycidyl methacrylate pendant from the polymer chain.

The selectively permeable composition disclosed above may be produced by any means known to one skilled in the art. It is substantially melt-processable and may be produced by combining one or more ethylene acid copolymers, basic compound(s), polyamides and compatibilizers (i.e. dicarboxylate-containing copolymer or ethylene glycidyl copolymer) to form a mixture; and heating the mixture under a condition sufficient to produce the composition. Heating may be carried out under a temperature in the range of from 140 to 350, 160 to 335, or 180 to 320°C under a pressure that accommodates the temperature for a period from 30 seconds to 2 or 3 hours. For example, the composition may be produced by melt-blending an acid copolymer and/or ionomer thereof; concurrently or subsequently combining a sufficient amount of a basic metal compound capable of neutralization of the acid moieties to the desired nominal neutralization level; and combining with a polyamide and a compatibilizer described above. A salt-and-pepper blend of components may be made or the components may be melt-blended in an extruder.

In some cases, it may be possible to neutralize the ethylene acid copolymer with a basic compound in the presence of the other polymeric materials such as the polyamide component. However, it is desirable to prepare the ionomer and then subsequently blend in the polyamide and compatibilizer.

The composition can additionally comprise optional nonpolymeric materials, such as conventional additives used in polymer films including plasticizers, stabilizers, antioxidants, ultraviolet ray absorbers and stabilizers, hydrolytic stabilizers, anti-static agents, dyes or pigments, fillers, lubricants, processing aids, antiblock agents, release agents, and/or mixtures thereof. These additives are described in the Kirk Othmer Encyclopedia of Chemical Technology. These additives may be present in up to 20 weight % of the total composition, more preferably in up to 10 weight %.

The additives may be incorporated into the composition by any known process such as by dry blending, extruding a mixture of the various constituents, the conventional masterbatch technique, or the like.

The composition may be formed into articles by various means known to those skilled in the art. For example, the composition may be extruded, laminated, or the like to provide an article that is in a desired shape and size; preferably cast or blown into a sheet or film. Films can be tubular or flat, and can be further manipulated into other packaging forms such as bags or pouches by operations including cutting, folding and adhering the film to itself or other films.

Molten extruded polymers can be converted into a film using any techniques known to one skilled in the art. For example, a film or sheet comprising the selectively permeable composition can be made by blown film extrusion, cast film extrusion and cast sheet extrusion. Preferably, the film is made by blown film extrusion or coextrusion (for multilayer films).

A notable method to prepare a film as described above wherein the film is in tubular form comprises using a double bubble or triple bubble blown film process.

A multilayer structure such as a film may be made from a layer comprising the selectively permeable polyamide-ionomer composition and at least one other layer comprising a composition other than the polyamide-ionomer composition. The layers may be coextruded or they may be formed independently and then adhesively attached to one another to form a multilayer structure such as by extrusion coating or lamination onto a substrate comprising one or more other layers. For example, additional layers may comprise or be produced from thermoplastic resins, to which the layer made from the polyamide-ionomer composition is adhered, to provide structure layers, to provide protection or improve the appearance of the article.

A multilayer film may be prepared by coextrusion. For example, granulates of the selectively permeable composition or components thereof and granulates of the components of other layers are melted in extruders to produce molten polymeric resins, which are passed through a die or set of dies to form layers of molten polymers that are processed as a laminar flow. The molten polymers are cooled to form a layered structure.

Examples include multilayer films comprising a layer of the selectively permeable composition and at least one additional layer comprising a polyamide composition other than the selectively permeable composition, or multilayer films comprising a layer of the selectively permeable composition and at least one additional layer comprising an ionomer composition other than the selectively permeable composition.

More specifically, a multilayer film may comprise a layer of the selectively permeable composition as an inner layer (a layer in which both principle surfaces of the layer contacts another layer of the structure or a substrate) and at least one surface layer (a layer in which only one principle surface contacts another layer) comprising a polyamide that is not blended with the ionomer. Other multilayer films include those with at least one inner layer of the selectively permeable composition, an inner layer comprising an ionomer composition that is not blended with polyamide, and a surface layer comprising a polyamide that is not blended with an ionomer.

Multilayer film examples include the structures listed below, wherein "PA" indicates a polyamide without added ionomer, "ionomer" indicates an ionomer without added polyamide, and "PA-ionomer" indicates a polyamide-ionomer blend as defined above. In each of the examples, the polyamides used in the various layers may be the same or different, and the ionomer used in the various layers may be the same or different. For example, ionomers used in layers not containing the PA-ionomer blend may include ionomers with cations not including potassium. Also, multilayer structures with more than one layer each containing a polyamide-ionomer blend are contemplated. In such structures the polyamide-ionomer blend may be the same or different in each layer. In these examples the layers are, from left to right outermost to innermost, where "outermost" is the layer intended to be farthest from the foodstuff in the final packaged foodstuff article and "innermost" contacts the packaged foodstuff.

PA-ionomer/ionomer/PA-ionomer,
PA-ionomer/PA,
PA/PA-ionomer,
PA-ionomer-1 /PA-ionomer-2/PA,
PA/PA-ionomer/PA,
PA-ionomer/ionomer/PA,
PA-ionomer/PA/PA-ionomer, and
PA/PA-ionomer/ionomer/PA-ionomer/PA.

Multilayer films preferably may include from two to five layers and/or are preferably blown films.

A film as described herein can be further oriented beyond the immediate quenching or casting of the film. The film may be uniaxially oriented, but is preferably biaxially oriented by drawing in two mutually perpendicular directions in the plane of the film to achieve a satisfactory combination of mechanical and physical properties.

Orientation and stretching apparatus to uniaxially or biaxially stretch film are known in the art and may be adapted by those skilled in the art to produce films of the present invention. Examples of such apparatus and processes include, for example, those disclosed in U.S. Patents 3,278,663; 3,337,665; 3,456,044; 4,590,106; 4,760,116; 4,769,421; 4,797,235 and 4,886,634.

In a preferred embodiment, the film is oriented using a double bubble extrusion process, where simultaneous biaxial orientation may be effected by extruding a primary tube which is subsequently quenched, reheated and then expanded by internal gas pressure to induce transverse orientation, and drawn by differential speed nip or conveying rollers at a rate which will induce longitudinal orientation.

The double bubble processing to obtain an oriented blown film can be carried out as described by Pahlke in U.S. Patent 3,456,044. More particularly, a primary tube is melt extruded from an annular die. This extruded primary tube is cooled quickly to minimize crystallization. It is then heated to its orientation temperature (for example, by means of a water bath). In the orientation zone of the film fabrication unit a secondary tube is formed by inflation, thereby the film is radially expanded in the transverse direction and pulled or stretched in the machine direction at a temperature such that expansion occurs in both directions, preferably simultaneously; the expansion of the tubing being accompanied by a sharp, sudden reduction of thickness at the draw point. The tubular film is then again flattened through nip rolls. Optionally, the film can be reinflated and passed through an annealing step (thermofixation), during which step it is heated once more to adjust the shrink properties. Films that are not annealed may be useful as heat-shrinkable films. Annealed films will have better dimensional stability (less shrinkage) when reheated. For preparation of food casings (for example, sausage casings) it may be desirable to maintain the film in a tubular form. For preparing flat films the tubular film can be slit along its length and opened up into flat sheets that can be rolled and/or further processed.

Preferably, the film can be processed on the film fabrication machine at a speed from 50 meters per minute (m/min) to a speed of 200 m/min.

The films have an MVTR of at least 300 $g/m^2$-24 hours. Preferably, the films have an MVTR of at least 500, or alternatively least 750, or alternatively least 1000, or higher.

Films described herein can be useful for encasing and processing foodstuffs. Typically, the films are made into tubular casings, preferably by using blown film techniques to prepare a tubular form directly, or by forming a flat sheet of the film into a tubular structure and fastening the edges of the sheet in a seam running the length of the tube.

To facilitate the introduction of the foodstuff into the interior of the tubular casing, the casing optionally may be shirred prior to the introduction of the foodstuff. The term "shirred" means that the tubular casing is gathered into a multiplicity of rows parallel to the circumference of the tubing. "Shirring" is the operation of preparing a shirred casing. The foodstuff is introduced into the interior of the optionally shirred tubular casing via an open end and the tube is stretched out to encase the foodstuff. One end of the tubing may be closed prior to filling. After filling, the open end(s) are closed to contain the foodstuff. One skilled in the art of packaging foodstuffs can readily introduce the foodstuff into the casing using well-established procedures.

Food packaging structures also may be prepared by a combination of folding, heat sealing, and optionally thermoforming and/or heat shrinking. Such packages may be useful for packaging larger or irregularly shaped food products such as hams or turkey parts that may be smoked.

Those cast films or sheets that are nearly amorphous and/or not previously oriented may be further thermoformed into articles and structures followed by heat treatment. The thermoformed articles can be prepared by any means known to one skilled in the art, for example by heating the amorphous sheet to above the glass transition temperature (Tg) and below the melting point of the polymer compositions, stretching the sheet by vacuum or pressure forming using a mold to provide a stretched article, and cooling the stretched article to provide a finished article. The stretched article may be optionally heat treated to provide greater crystallization, thus providing dimensional stability for the shaped structure upon reheating. It may be desirable to thermoform the sheets into a shape that approximates the shape of the food product to be packaged.

Because of their good moisture permeability, the obtained casings are believed to be rapidly smokeable and the smoked product will have taste and appearance like a sausage manufactured in conventional smokeable casings. The required smoking time is expected to be short, thus making said sausage casings particularly suitable for the manufacture of cooked meat sausages, scalded-emulsion meat products, cooked or rapidly fermented sausages containing fat, and smoked meat products such as hams or turkey, on an industrial scale. Very thin casings can be manufactured that still retain good pressure resistance, dimensional stability and good cooking durability. Further, weight loss of sausages manufactured in casings described herein is expected to be significantly lower than when using natural or cellulose based casings.

Since the films and casings described herein are also heat-sealable, the manufacture of sausages is more simple and economic. They are fat-proof, that is, no fat leaks through the casings, making them particularly suitable for many fat-containing cooked or fermented sausages.

The tubular casing optionally may be further treated by the adsorption of at least one liquid food-processing flavorant and/or colorant into the absorbent casing. The flavorant and/or colorant is subsequently transferred to the foodstuff during such food processing as heating, curing, smoking, or cooking, for example.

Foodstuffs that can be processed using film of this invention include beef, pork, poultry (for example, chicken or turkey), seafood (for example, fish or mollusks) and cheese. Meat products can be whole-muscle, formed into shapes, or ground. In the case of formed or ground meat, the meat can optionally be a mixture of material derived from more than one species. The foodstuff can be processed prior to its introduction into a casing of the present invention and then further processed in the casing.

In another embodiment, films described herein can also be used for packaging foodstuffs where it is desirable to have absorption of moisture from the foodstuff, while retaining moisture within the packaging. The films can be used, for example, to package uncooked meat or cooked meats (e.g. beef, pork, poultry, ham or seafood) wherein moisture from the foodstuff or excess marinades on the foodstuff can pass out of the foodstuff and pool below.

The following examples are merely illustrative, and are not to be construed as limiting to the scope of the invention.

Examples

Melt index or "MI" is the mass rate of flow of a polymer through a specified capillary under controlled conditions of temperature and pressure and was determined according to ASTM 1238 at 190°C using a 2160 g weight, reported in g/10 minutes.

For film samples with high water permeability (greater than 100 g/m$^2$-24h), the water vapor transmission tests were conducted on a Mocon PERMATRAN-W 101K, following ASTM D6701-01, at 37.8°C at 100% relative humidity. Moisture vapor transmission rates (MVTR) of film samples are reported in g/m$^2$-24h. The moisture vapor permeation value (MVPV) for a composition is calculated by dividing the MVTR of a monolayer film of the composition by the thickness of the film and is reported in g-25.4 $\mu$m/m$^2$-24h (g-mil/m$^2$-24h).

In order to illustrate the moisture permeance associated with a film layer involving a selectively permeable composition as described herein, cast films were prepared from the materials listed below.

Materials Used

KI-1: A potassium-containing ionomer composition, composed of a mixture of ethylene methacrylic acid (EMAA) copolymers and an ethylene methyl acrylate (EMA) copolymer having an overall composition of 14.9% methacrylic acid and 0.9% methyl acrylate. The combined acid moieties present are nominally neutralized to 84.8% to form potassium salts and the MI is 1.95 g/10minute. From earlier tests on a 63.5 $\mu$m (2.5-mil) thick monolayer film, the MVPV of KI-1 was determined to be 82.22 g-mm/m$^2$-24 hours (3237 g-mil/m$^2$-24 hours).

F-1: an ethylene/methyl acrylate copolymer grafted with 1.8 weight % of maleic anhydride with MI of 1.8 g/10minute, available from DuPont as FUSABOND® 556. PA-6/66: A nylon-6/66 polymer available from BASF as ULTRAMIDC® C33 01.

EBAGMA: an autoclave-produced ethylene n-butyl acrylate glycidyl methacrylate terpolymer (66.75 wt% ethylene, 28 wt% n-butyl acrylate, 5.25 wt% glycidyl methacrylate) with MI of 12 g/10minute, melting range 50°C to 80°C.

KI-1 was melt blended with PA-6/66 and compatibilizers as summarized in Table 1, according to the following general procedure. Using a 30-mm twin-screw extruder equipped with high mixing screws, the polyamide and compatibilizer were metered in from the rear feeder and KI-1 was fed from the rear feeder. The processing conditions included a melt temperature of 270 to 320 °C and a screw speed of 500 rpm.

After melt blending, the example compositions were formed into extrusion cast films according to standard general procedures for cast films.

Tensile properties of the films were measured according to ASTM D882 in both machine direction (MD) and transverse direction (TD). Secant Modulus was determined by stretching a one inch wide die cut film at 1.27 cm/minute (0.5 inch/minute) in MD and TD to determine the tensile modulus at 1% and 2% elongation. The modulus is reported as secant modulus at the elongation.

The results are summarized in Table 1, with examples 3 and 6 not being according to the invention.

Table 1

| Examples | 1 | 2 | 3 | 4 | 5 | 6 | C1 |
|---|---|---|---|---|---|---|---|
| PA-6/66 | 67.5 | 69 | 70 | 57.5 | 59 | 60 | 100 |

(continued)

| Examples | 1 | 2 | 3 | 4 | 5 | 6 | C1 |
|---|---|---|---|---|---|---|---|
| KI-1 | 30 | 30 | 30 | 40 | 40 | 40 | 0 |
| F-1 | 2.5 | 0 | 0 | 2.5 | 0 | 0 | 0 |
| EBAGMA | 0 | 1 | 0 | 0 | 1 | 0 | 0 |
| Cast film, thickness, mil Cast film, thickness, μm | 1.3 33.02 | 1.05 26.67 | 1.1 27.94 | 1.2 30.48 | 1.05 26.67 | 1.1 27.94 | 1.05 26.67 |
| MVTR, g/m$^2$-24 hours | 855 | 951 | 625 | 469 | 592 | 491 | 554 |
| Calculated MVPV,g-mil/m$^2$-24 hours Calculated MVPV,g-mm/m$^2$-24 hours | 1114 28.30 | 997 25.32 | 698 17.73 | 558 14.17 | 620 15.75 | 541 13.72 | 581 14.76 |
| Secant Modulus 72°F, 50% RH, 0.5 inch/minute (22.2°C, 50% RH, 1. 27 cm/min) | | | | | | | |
| at 1 % elongation, kpsi (MPa) | | | | | | | |
| MD | 31.6 (217.9) | 28.7 (197.88) | 34.5 (237.87) | 27.4 (188.92) | 30.8 (212.36) | 28.1 (193.74) | 53.4 (368.18) |
| TD | 31.5 (217.18) | 31.9 (219.94) | 35.3 (243.38) | 26 (179.26) | 26 (179.26) | 27.8 (191.67) | NA |
| at 2 % elongation, kpsi (MPa) | | | | | | | |
| MD | 29.1 (200.64) | 26.8 (184.78) | 31.7 (218.56) | 24.8 (170.99) | 28.5 (196.5) | 25.7 (177.2) | 49.1 (338.5) |
| TD | 28.3 (195.12) | 29.2 (201.33) | 31.7 (218.56) | 23.1 (159.27) | 24 (165.47) | 24.7 (170.3) | NA |
| Tensile Properties (D882) | | | | | | | |
| Tensile Strength, kpsi (MPa) | | | | | | | |
| MD | 7.25 (49.99) | 7.47 (51.50) | 7.81 (53.85) | 6.19 (42.68) | 7.43 (51.23) | 7.47 (51.50) | 8.54 (58.88) |
| TD | 3.97 (27.37) | 4.9 (33.78) | 4.32 (29.79) | 2.32 (16.0) | 3.67 (25.30) | 3.68 (25.37) | 8.02 (55.30) |
| Yield stress, kpsi (MPa) | | | | | | | |
| MD | 2.76 (19.03) | 2.66 (18.34) | 2.79 (19.24) | 2.5 (17.24) | 2.7 (18.62) | 2.91 (20.06) | 3.43 (23.65) |
| TD | 2.27 (15.65) | 2.42 (16.69) | 2.44 (16.82) | 2.16 (14.89) | 2.15 (14.82) | 2.29 (15.79) | 3.38 (23.30) |
| Yield % | | | | | | | |
| MD | 20.7 | 19.4 | 21.9 | 21.3 | 23.9 | 23.4 | 13.3 |
| TD | 12.3 | 12.2 | 11.8 | 13.2 | 13.1 | 13.1 | 11.6 |
| Elongation at break, % | | | | | | | |
| MD | 362 | 394 | 423 | 376 | 405 | 374 | 391 |
| TD | 329 | 373 | 339 | 207 | 340 | 331 | 371 |

The monolayer films in Table 1 had MVTR greater than 300 g/m$^2$-24h. Most had MVTR of at least 500 g/m$^2$-24h and some had MVTR of at least 750 g/m$^2$-24h.

After accounting for film thickness, the compositions had MVPV of at least 7.62 g-mm/m$^2$-24h (300 g-mil/m$^2$-

24h) or at least 12.7 g-mm/m$^2$-24h (500 g-mil/m$^2$-24h), and in some cases, at least 19.1 g-mm/m$^2$-24h (750 g-mil/m$^2$-24h) or 25.4 g-mm/m$^2$-24h (1000 g-mil/m$^2$-24h).

**Claims**

1. A film comprising a first layer wherein
   the film has a moisture vapor transmission rate of at least 300 g/m$^2$-24 hours, according to ASTM D6701-01, at 37.8 °C at 100% relative humidity, and wherein the film is from 6.4 $\mu$m (0.25 mils) to 0.13 mm (5 mils) in thickness;
   the layer comprises a selectively permeable blend;
   the blend comprises, based on the weight of the blend, 50 to 80 % of polyamide, 20 to 50 % of a potassium-containing composition, a dipolymer in an amount of up to 10 %, and a compatibilizer in an amount of up to 5 %;
   the potassium-containing composition comprises an ethylene acid copolymer; wherein said ethylene acid copolymer comprises, based on the weight of the ethylene acid copolymer, copolymerized units of ethylene, 10 to 35 % of copolymerized units of at least one C$_{3-8}$ $\alpha,\beta$-ethylenically unsaturated carboxylic acid, and optionally from 0 to 35 % of copolymerized units of a comonomer selected from the group consisting of alkyl acrylate, alkyl methacrylate and combinations thereof,
   the rest being derived from the ethylene; and greater than 80% of the carboxylic acid moieties of the ethylene acid copolymer are neutralized to salts with potassium cations or a combination of potassium and one or more alkali metal, transition metal, and alkaline earth metal cations in which potassium comprises a preponderance of the cations;
   the dipolymer consists essentially of copolymerized units of ethylene and alkyl acrylate or alkyl methacrylate;
   the compatibilizer is selected from the group consisting of a dicarboxylate-containing copolymer, an ethylene glycidyl ester copolymer, and combinations thereof; and
   the ethylene glycidyl ester copolymer comprises, based on the weight of the ethylene glycidyl ester copolymer, 30 to 95% of copolymerized units of ethylene, 0.5 to 25% of copolymerized units of one or more olefins of the formula CH$_2$=C(R$^1$)CO$_2$R$^2$, and 0 to 70% of copolymerized units of one or more olefins of the formula CH$_2$=C(R$^3$)CO$_2$R$^4$; wherein R$^1$ is hydrogen or an alkyl group with 1 to 6 carbon atoms, R$^2$ is glycidyl, R$^3$ is hydrogen or an alkyl group with 1 to 8 carbon atoms and R$^4$ is an alkyl group with 1 to 8 carbon atoms.

2. The film of claim 1 wherein
   the film is from 13 $\mu$m (0.5 mils) to 76 $\mu$m (3 mils) in thickness; and
   the polyamide is an aliphatic polyamide, amorphous polyamide, or partially aromatic polyamides and is preferably selected from the group consisting of nylon-6, nylon-11, nylon-12, and nylon-6,12, nylon-66, nylon-610, nylon-612, nylon-1010, and nylon-1212, nylon-66/610, nylon 6/66, nylon 6/69, nylon MXDA, nylon 6-I/6-T, and combinations of two or more thereof.

3. The film of claim 2 wherein the polyamide is nylon-6 homopolymer or copolymer, nylon 66, nylon 612, nylon 6/66, nylon 6/12,
   nylon 6/69, or MXDA-containing polyamides and is preferably nylon-6, nylon-6/66, nylon-66, or mixtures of nylon-6/66 and nylon-6.

4. The film of any claim of claims 1 to 3 wherein the blend comprises 0.1 to 10 % of the dipolymer.

5. The film of any claim of claims 1 to 4 wherein the blend comprises 0.1 to 5 % of the dicarboxylate-containing copolymer, which is an ethylene methyl acrylate copolymer grafted with maleic anhydride, an ethylene maleic acid monoester copolymer, or both.

6. The film of any claim of claims 1 to 5 wherein the blend comprises 0.1 to 5 % of the ethylene glycidyl ester copolymer, which is an ethylene glycidyl methacrylate dipolymer, ethylene butyl acrylate glycidyl methacrylate terpolymer, or both.

7. The film of any claim of claims 1 to 6 having a moisture vapor transmission rate of at least 500, at least 750 or at least 1000 g/m$^2$-24 hours, according to ASTM D6701-01, at 37.8 °C at 100% relative humidity.

8. The film of any claim of claims 1 to 7 wherein the film is biaxially oriented.

9. The film of any claim of claims 1 to 7 further comprising at least one second layer, which comprises a polyamide composition wherein the polyamide differs from the polyamide in the first layer and the polyamide composition in each of the second layer is independently selected from the group consisting of a polyamide and a polyamide ionomer blend.

10. The film of claim 9 wherein the first layer is an inner layer and the second layer is a surface layer; the inner layer is a layer in which both surfaces of the layer can be in direct contact with another layer or a substrate.

11. The film of claim 10 wherein the film is selected from a multilayer film having the structure of (1) polyamide ionomer blend layer-first layer-polyamide ionomer blend layer, (2) polyamide layer-first layer-polyamide layer, (3) polyamide layer-polyamide layer-first layer, (4) polyamide ionomer blend layer-first layer-polyamide layer, (5) polyamide ionomer blend layer-polyamide layer-first layer-polyamide ionomer blend layer, (6) polyamide layer-polyamide ionomer blend layer-first layer-polyamide ionomer blend layer, or (7) polyamide layer-polyamide ionomer blend layer-first layer-polyamide ionomer blend layer-polyamide layer.

12. A package comprising or produced from a film as **characterized in** any one of claims 1 to 11 for containing and processing a foodstuff.

13. The package of claim 12 wherein the package is a tubular package.

14. The package of claim 12 wherein the package is a sausage casing.

15. A method comprising preparing a package comprising or produced from a film; placing a foodstuff inside the package; and treating the packaged with smoke and heat wherein the film is as recited in any one of claims 1 to 11 and the foodstuff is a cooked meat sausage, a scalded-emulsion meat product, a cooked or rapidly fermented sausage containing fat, or a smoked meat product.


**Patentansprüche**

1. Folie umfassend eine erste Schicht, wobei
die Folie eine Feuchtigkeitsdampfdurchlässigkeitsrate von mindestens 300 g/m$^2$-24 Stunden ASTM D6701-01 entsprechend bei 37,8 °C bei einer relativen Feuchte von 100 % aufweist und wobei die Folie 6,4 $\mu$m (0,25 mil) bis 0,13 mm (5 mil) dick ist;
die Schicht eine selektiv durchlässige Mischung umfasst;
die Mischung, auf das Gewicht der Mischung bezogen, 50 bis 80 % Polyamid, 20 bis 50 % einer kaliumhaltigen Zusammensetzung, ein Dipolymer in einer Menge von bis zu 10 % und einen Kompatibilisator in einer Menge von bis zu 5 % umfasst;
die kaliumhaltige Zusammensetzung ein Ethylensäurecopolymer umfasst;
wobei das Ethylensäurecopolymer, auf das Gewicht des Ethylensäurecopolymers bezogen, copolymerisierte Einheiten von Ethylen, 10 bis 35 % copolymerisierte Einheiten von mindestens einer C$_{3-8}$-$\alpha$,$\beta$-ethylenisch ungesättigten Carbonsäure und wahlweise 0 bis 35 % copolymerisierte Einheiten eines Comonomers ausgewählt aus der Gruppe bestehend aus Alkylacrylat, Alkylmethacrylat und Kombinationen davon umfasst,
wobei der Rest von Ethylen abgeleitet ist; und mehr als 80 % der Carbonsäureanteile des Ethylensäurecopolymers mit Kaliumkationen oder einer Kombination von Kalium und einem oder mehreren Alkalimetall-, Übergangsmetall- und Erdalkalimetallkationen zu Salzen neutralisiert sind, wobei Kalium ein Überwiegen der Kationen umfasst;
das Dipolymer im Wesentlichen aus copolymerisierten Einheiten von Ethylen und Alkylacrylat oder Alkylmethacrylat besteht;
der Kompatibilisator aus der Gruppe ausgewählt ist bestehend aus einem Dicarboxylat enthaltenden Copolymer, einem Ethylenglycidylestercopolymer und Kombinationen davon; und
das Ethylenglycidylestercopolymer, auf das Gewicht des Ethylenglycidylestercopolymers bezogen, 30 bis 95 % copolymerisierte Einheiten von Ethylen, 0,5 bis 25 % copolymerisierte Einheiten von einem oder mehreren Olefinen der Formel CH$_2$=C(R$^1$)CO$_2$R$^2$ und 0 bis 70 % copolymerisierte Einheiten eines oder mehrerer Olefine der Formel CH$_2$=C(R$^3$)CO$_2$R$^4$ umfasst; wobei R$^1$ Wasserstoff oder eine Alkylgruppe mit 1 bis 6 Kohlenstoffatomen ist, R$^2$ Glycidyl ist, R$^3$ Wasserstoff oder eine Alkylgruppe mit 1 bis 8 Kohlenstoffatomen ist, und R$^4$ eine Alkylgruppe mit 1 bis 8 Kohlenstoffatomen ist.

2. Folie nach Anspruch 1, wobei
die Folie 13 $\mu$m (0,5 mil) bis 76 $\mu$m (3 mil) dick ist; und

das Polyamid ein aliphatisches Polyamid, amorphes Polyamid oder teilweise aromatisches Polyamide ist und bevorzugt aus der Gruppe ausgewählt ist bestehend aus Nylon-6, Nylon-11, Nylon-12 und Nylon-6,12, Nylon-66, Nylon-610, Nylon-612, Nylon-1010 und Nylon-1212, Nylon-66/610, Nylon 6/66, Nylon 6/69, Nylon MXDA, Nylon 6-I/6-T und Kombinationen von zwei oder mehreren davon.

3. Folie nach Anspruch 2, wobei das Polyamid Nylon-6-homopolymer oder -copolymer, Nylon 66, Nylon 612, Nylon 6/66, Nylon 6/12, Nylon 6/69 oder MXDA enthaltende Polyamide und bevorzugt Nylon-6, Nylon-6/66, Nylon-66, oder Mischungen von Nylon-6/66 und Nylon-6 ist.

4. Folie nach einem der Ansprüche 1 bis 3, wobei die Mischung 0,1 bis 10 % des Dipolymers umfasst.

5. Folie nach einem der Ansprüche 1 bis 4, wobei die Mischung 0,1 bis 5 % des Dicarboxylat enthaltenden Copolymers umfasst, das ein mit Maleinsäureanhydrid, einem Ethylen-Maleinsäuremonoester-Copolymer oder beiden gepfropftes Ethylen-Methylacrylat-Copolymer ist.

6. Folie nach einem der Ansprüche 1 bis 5, wobei die Mischung 0,1 bis 5 % des Ethylenglycidylestercopolymers umfasst, das ein Ethylen-Glycidyl-Methacrylat-Dipolymer, Ethylen-Butylacrylat-Glycidylmethacrylat-Terpolymer oder beides ist.

7. Folie nach einem der Ansprüche 1 bis 6, die eine Feuchtigkeitsdampfdurchlässigkeitsrate von mindestens 500, mindestens 750 oder mindestens 1000 g/m$^2$-24 Stunden ASTM D6701-01 entsprechend bei 37,8 °C bei einer relativen Feuchte von 100 % aufweist.

8. Folie nach einem der Ansprüche 1 bis 7, wobei die Folie biaxial orientiert ist.

9. Folie nach Anspruch 1 bis 7, ferner mindestens eine zweite Schicht umfassend, die eine Polyamidzusammensetzung umfasst, wobei das Polyamid von dem Polyamid in der ersten Schicht verschieden ist und die Polyamidzusammensetzung in jeder der zweiten Schichten unabhängig aus der Gruppe ausgewählt ist bestehend aus einem Polyamid und einer Polyamidionomermischung.

10. Folie nach Anspruch 9, wobei die erste Schlicht eine Innenschicht ist und die zweite Schicht eine Oberflächenschicht ist; die Innenschicht eine Schicht ist, bei der beide Oberflächen der Schicht in direktem Kontakt mit einer anderen Schicht oder einem Substrat stehen können.

11. Folie nach Anspruch 10, wobei die Folie aus einer mehrschichtigen Folie ausgewählt ist, die die Struktur aufweist von (1) Polyamidionomermischungsschicht - erste Schicht - Polyamidionomermischungsschicht, (2) Polyamidschicht - erste Schicht - Polyamidschicht, (3) Polyamidschicht - Polyamidschicht - erste Schicht, (4) Polyamidionomermischungsschicht - erste Schicht - Polyamidschicht, (5) Polyamidionomermischungsschicht - Polyamidschicht - erste Schicht - Polyamidionomermischungsschicht, (6) Polyamidschicht - Polyamidionomermischungsschicht - erste Schicht - Polyamidionomermischungsschicht oder (7) Polyamidschicht - Polyamidionomermischungsschicht - erste Schicht - Polyamidionomermischungsschicht - Polyamidschicht.

12. Packung, die eine Folie wie nach einem der Ansprüche 1 bis 11 gekennzeichnet umfasst oder daraus hergestellt ist, für das Halten und Verarbeiten eines Nahrungsmittels.

13. Packung nach Anspruch 12, wobei die Packung eine röhrenförmige Packung ist.

14. Packung nach Anspruch 12, wobei die Packung eine Wursthülle ist.

15. Verfahren umfassend das Herstellen einer Packung umfassend eine oder hergestellt aus einer Folie; Positionieren eines Nahrungsmittels in der Packung; und Behandeln des Gepackten mit Rauch und Wärme, wobei die Folie wie in einem der Ansprüche 1 bis 11 aufgeführt ist und das Nahrungsmittel eine gekochte Fleischwurst, ein überbrühtes Emulsionsfleischprodukt, eine gekochte oder schnell fermentierte, fetthaltige Fleischwurst oder ein geräuchertes Fleischprodukt ist.

**Revendications**

1. Film comprenant une première couche dans lequel
le film présente un taux de transmission de la vapeur d'eau d'au moins 300 g/m$^2$-24 heures, selon la norme ASTM D6701-01, à 37,8°C sous une humidité relative de 100 %, et dans lequel le film est de 6,4 $\mu$m (0,25 mil) à 0,13 mm (5 mils) d'épaisseur;
la couche comprend un mélange sélectivement perméable;
le mélange comprend, sur la base du poids du mélange, de 50 à 80 % de polyamide, de 20 à 50 % d'une composition contenant du potassium, un dipolymère en une quantité allant jusqu'à 10 %, et un agent de mise en compatibilité en une quantité allant jusqu'à 5 %;
la composition contenant du potassium comprend un copolymère d'éthylène-acide; dans laquelle ledit copolymère d'éthylène-acide comprend, sur la base du poids du copolymère d'éthylène-acide, des motifs copolymérisés d'éthylène, de 10 à 35 % de motifs copolymérisés d'au moins un acide carboxylique en C$_3$ à C$_8$ $\alpha,\beta$-éthyléniquement insaturé, et éventuellement de 0 à 35 % de motifs copolymérisés d'un comonomère sélectionné dans le groupe constitué d'un acrylate d'alkyle, d'un méthacrylate d'alkyle et de leurs combinaisons,
le reste étant dérivé de l'éthylène; et plus de 80 % des fractions acide carboxylique du copolymère d'éthylène-acide sont neutralisées en sels avec des cations potassium ou une combinaison de potassium et d'un ou plusieurs cations de métal alcalin, de métal de transition, et de métal alcalino-terreux dans lesquels le potassium comprend une prépondérance de cations;
le dipolymère est essentiellement constitué de motifs copolymérisés d'éthylène et d'acrylate d'alkyle ou de méthacrylate d'alkyle;
l'agent de mise en compatibilité est sélectionné dans le groupe constitué d'un copolymère contenant un dicarboxylate, d'un copolymère d'éthylène-ester de glycidyle, et de leurs combinaisons; et
le copolymère d'éthylène-ester de glycidyle comprend, sur la base du poids du copolymère d'éthylène-ester de glycidyle, de 30 à 95 % de motifs copolymérisés d'éthylène, de 0,5 à 25 % de motifs copolymérisés d'une ou plusieurs oléfines de la formule CH$_2$=C(R$^1$)CO$_2$R$^2$ et de 0 à 70 % de motifs copolymérisés d'une ou plusieurs oléfines de la formule CH$_2$=C(R$^3$)CO$_2$R$^4$; dans lequel R$^1$ est un atome d'hydrogène ou un groupe alkyle ayant de 1 à 6 atomes de carbone, R$^2$ est un groupe glycidyle, R$^3$ est un atome d'hydrogène ou un groupe alkyle ayant de 1 à 8 atomes de carbone et R$^4$ est un groupe alkyle ayant de 1 à 8 atomes de carbone.

2. Film selon la revendication 1, dans lequel
le film est de 13 $\mu$m (0,5 mil) à 76 $\mu$m (3 mils) d'épaisseur; et
le polyamide est un polyamide aliphatique, un polyamide amorphe, ou des polyamides partiellement aromatiques et est de préférence sélectionné dans le groupe constitué du nylon-6, nylon-11, nylon-12, et nylon-6,12, nylon-66, nylon-610, nylon-612, nylon-1010, et nylon-1212, nylon-66/610, nylon-6/66, nylon-6/69, nylon MXDA, nylon 6-I/6-T, et des combinaisons de deux ou plusieurs d'entre eux.

3. Film selon la revendication 2, dans lequel le polyamide est l'homopolymère ou le copolymère de nylon-6, le nylon-66, nylon-612, nylon-6/66, nylon-6/12, nylon-6/69, ou les polyamides contenant du MXDA et est de préférence le nylon-6, nylon-6/66, nylon-66, ou les mélanges de nylon-6/66 et de nylon-6.

4. Film selon l'une quelconque des revendications 1 à 3, dans lequel le mélange comprend de 0,1 à 10 % du dipolymère.

5. Film selon l'une quelconque des revendications 1 à 4, dans lequel le mélange comprend de 0,1 à 5 % du copolymère contenant un dicarboxylate, qui est un copolymère d'éthylène-acrylate de méthyle greffé avec de l'anhydride maléique, un copolymère d'éthylène-monoester d'acide maléique, ou les deux.

6. Film selon l'une quelconque des revendications 1 à 5, dans lequel le mélange comprend de 0,1 à 5 % du copolymère d'éthylène-ester de glycidyle, qui est un dipolymère d'éthylène-méthacrylate de glycidyle, terpolymère d'éthylène-acrylate de butyle-méthacrylate de glycidyle, ou les deux.

7. Film selon l'une quelconque des revendications 1 à 6 ayant un taux de transmission de la vapeur d'eau d'au moins 500, d'au moins 750 ou d'au moins 1 000 g/m$^2$-24 heures, selon la norme ASTM D6701-01, à 37,8°C sous une humidité relative de 100 %.

8. Film selon l'une quelconque des revendications 1 à 7, dans lequel le film est biaxialement orienté.

9. Film selon l'une quelconque des revendications 1 à 7, comprenant en outre au moins une seconde couche qui comprend une composition de polyamide, dans lequel le polyamide diffère du polyamide dans la première couche et la composition de polyamide dans chaque seconde couche est indépendamment sélectionnée dans le groupe constitué d'un polyamide et d'un mélange de polyamide ionomère.

10. Film selon la revendication 9, dans lequel la première couche est une couche interne et la seconde couche est une couche de surface; la couche interne est une couche dans laquelle les deux surfaces de la couche peuvent se trouver en contact direct avec une autre couche ou un substrat.

11. Film selon la revendication 10, dans lequel le film est sélectionné parmi un film multicouche ayant la structure de (1) couche de mélange de polyamide ionomère-première couche-couche de mélange polyamide ionomère, (2) couche de polyamide-première couche-couche de polyamide, (3) couche de polyamide-couche de polyamide-première couche, (4) couche de mélange polyamide ionomère-première couche-couche de polyamide, (5) couche de mélange polyamide ionomère-couche de polyamide-première couche-couche de mélange polyamide ionomère, (6) couche de polyamide-couche de mélange polyamide ionomère-première couche-couche de mélange polyamide ionomère, ou (7) couche de polyamide-couche de mélange polyamide ionomère-première couche-couche de mélange polyamide ionomère-couche de polyamide.

12. Emballage comprenant ou produit à partir d'un film tel que caractérisé selon l'une quelconque des revendications 1 à 11 pour contenir et transformer un aliment.

13. Emballage selon la revendication 12, dans lequel l'emballage est un emballage tubulaire.

14. Emballage selon la revendication 12, dans lequel l'emballage est un boîtier pour saucisse.

15. Procédé comprenant la préparation d'un emballage comprenant ou produit à partir d'un film; mise en place d'un aliment à l'intérieur de l'emballage; et traitement de l'emballage avec de la fumée et de la chaleur, où le film est tel qu'énoncé selon l'une quelconque des revendications 1 à 11 et l'aliment est une saucisse de viande cuite, un produit carné d'émulsion ébouillantée, une saucisse cuite ou rapidement fermentée contenant de la matière grasse, ou un produit carné fumé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5773059 A
- EP 797918 A
- EP 476963 A
- WO 9819551 A
- US 20040047951 A
- US 7045566 B
- US 61286903 A
- US 20080131713 A
- US 4303711 A
- US 5408000 A
- US 4174358 A
- US 3393210 A
- US 2512606 A
- US 2312966 A
- US 2241322 A
- US 4351931 A
- US 5028674 A

- US 3264272 A
- US 3344014 A
- US 2897183 A
- US 3350372 A
- US 3756996 A
- US 5532066 A
- US 5543233 A
- US 5571878 A
- US 3278663 A
- US 3337665 A
- US 3456044 A
- US 4590106 A
- US 4760116 A
- US 4769421 A
- US 4797235 A
- US 4886634 A

**Non-patent literature cited in the description**

- Advances in Food Research. Academic Press, Inc, 1984, vol. 29, 87-150
- Nylon Plastics. John Wiley and Sons, Inc, 1973

- High Flexibility EMA Made from High Pressure Tubular Process. *Annual Technical Conference - Society of Plastics Engineers,* 2002, vol. 2, 1832-1836
- **KIRK OTHMER.** Encyclopedia of Chemical Technology